# EUROPÄISCHE PATENTANMELDUNG

(11) **EP 2 821 424 A1**
(43) Veröffentlichungstag der Anmeldung: **07.01.2015**
(21) Anmeldenummer: 13175256.0
(22) Anmeldetag: 05.07.2013
(51) Int. Cl.: C08G 59/50, C04B 24/12, C04B 24/26, C04B 24/28, C04B 28/02, C04B 40/06, C08L 63/00, C09D 163/00

(54) **Multi-Komponenten-Zusammensetzung**

(71) Anmelder: Sika Technology AG, 6340 Baar (CH)
(72) Erfinder: Würmli, Fabio, 8820 Wädenswil (CH)
(74) Vertreter: Sika Patent Attorneys

(57) **Zusammenfassung**

Die vorliegende Erfindung betrifft eine Multi-Komponenten-Zusammensetzung, umfassend eine Epoxy-Komponente, umfassend mindestens ein reaktives Epoxyharz, eine Härter-Komponente, umfassend mindestens einen Härter für das Epoxyharz, eine Zement-Komponente, umfassend Zement und mindestens einen Füllstoff, sowie 0,1 bis 10 Gew.-%, bezogen auf das Gesamtgewicht der Multi-Komponenten-Zusammensetzung, mindestens eines bei 23°C festen polymeren Bindemittels. Durch Zusatz des mindestens einen polymeren Bindemittels lassen sich relevante Eigenschaften der Multi-Komponenten-Zusammensetzung, wie insbesondere deren Haftung, deren Druckfestigkeit und deren Schwindung, signifikant verbessern. Weitere Aspekte der vorliegenden Erfindung betreffen ein Verfahren zur Herstellung eines beschichteten Substrats mit Hilfe der vorstehend beschriebenen Zusammensetzung sowie beschichtete Substrate, die nach einem entsprechenden Verfahren herstellbar sind.

## Beschreibung

### Technisches Gebiet

Die vorliegende Erfindung betrifft eine Multi-Komponenten-Zusammensetzung, umfassend eine Epoxy-Komponente, eine Härter-Komponente, eine Zement-Komponente sowie 0,1 bis 10 Gew.-%, bezogen auf das Gesamtgewicht der Multi-Komponenten-Zusammensetzung, mindestens eines bei 23°C festen polymeren Bindemittels.

Weitere Aspekte der vorliegenden Erfindung betreffen die Verwendung des mindestens einen festen polymeren Bindemittels zur Verbesserung der Haftung und/oder der Druckfestigkeit und/oder zur Verminderung der Schwindung einer Multi-Komponenten-Zusammensetzung, ein Verfahren zur Herstellung von Bodenbelägen sowie die mit diesem Verfahren herstellbaren Bodenbeläge.

### Stand der Technik

Multi-Komponenten-Zusammensetzungen, die auf Epoxyharzen einerseits und Zement andererseits beruhen, sind schon seit vielen Jahren bekannt. Diese Systeme haben mit der Entwicklung von wasserverdünnbaren Aminhärter-Komponenten für Epoxyharze wesentliche Weiterentwicklungen erfahren.

Multi-Komponenten-Zusammensetzungen lassen sich verschiedenen Typen zuordnen. So beruht beispielsweise ein PIC (polymer impregnated-concrete)-System auf einem harzgetränkten Beton, bei dem die Kapillarporen eines schon erhärteten Zementbetons mit einem Monomer gefüllt werden, das anschließend darin polymerisiert wird. Bei PC (polymer-concrete)-Systemen, die aus einem mehrkomponentigen Harzsystem und Zement bestehen, übernimmt das mehrkomponentige Harz die Funktion eines Bindemittels für Zement und Wasser und bildet durch Zugabe von anorganischen Additiven einen Kunststoffbeton. Bei PCC-Systemen handelt es sich um Kunstharzmodifizierten Beton. Im Gegensatz beispielsweise zum PIC-System wird hier eine Polymerdispersion zum Frischbeton gegeben. Sowohl der Zement als auch der Kunststoff, der häufig ein Thermoplast ist, wirken dabei als Bindemittel.

Das ECC (epoxy-cement-concrete)-System stellt eine Sonderform des PCC dar und kann durch Zugabe von Wasser-emulgierbaren Epoxyharzen zu Zementleim und anorganischen Additiven hergestellt werden. In diesem System laufen die Härtungsreaktionen des Zements und der Epoxykomponente parallel ab, wobei sich aus dem Epoxyharz ein Duromernetzwerk bildet. Derartige Zusammensetzungen weisen vielfältige Vorteile auf, wie zum Beispiel eine bessere Verarbeitbarkeit des Frischmörtels, eine bessere Haftung des Frisch- und Festmörtels auf dem Untergrund, eine besseres Wasserrückhaltevermögen, eine erhöhte Frosttausalzbeständigkeit sowie, abhängig von der verwendeten Epoxy-Komponente, eine besser Elastizität des Festmörtels. ECC-Systeme sind seit vielen Jahren bekannt, so dass als Stand der Technik hier nur beispielhaft auf die EP 0 786 439 A1 verwiesen sei.

In der jüngeren Vergangenheit wurden die beschriebenen Systeme durch Zusatz von wässrigen Epoxyharz-Emulsionen modifiziert. Mit diesen Epoxyharz-Emulsionen, die mit in Wasser gelösten Aminen gehärtet werden, kann die Haftung der Zusammensetzungen auf feuchten Untergründen verbessert werden. Zudem kann das Epoxyharz die Funktion einer temporären Feuchtigkeitssperre übernehmen. Bei der weiteren Verarbeitung können diese Produkte bereits nach Härtung für 24 h bei 23°C mit reinen Epoxy-Produkten überschichtet werden. Nachteilig beim Zusatz derartiger flüssiger Polymere ist es jedoch, dass verschiedene Eigenschaften des Systems negativ beeinflusst werden, insbesondere die Festigkeit und die Haftung des Systems auf unterschiedlichen Untergründen. Es besteht daher ein Bedarf an Multi-Komponenten-Zusammensetzungen auf Basis von ECC-Systemen, bei denen die mit dem Zusatz von flüssigen Polymeren einhergehenden negativen Effekte im Wesentlichen kompensiert werden. Gleichzeitig sollen die durch die flüssigen Polymere bewirkten positiven Eigenschaften so weit wie möglich erhalten bleiben. Insbesondere besteht ein Bedarf nach ECC-Systemen, die im Vergleich zu den ECC-Systemen mit einem Zusatz an flüssigen Polymeren ein verbessertes Schwindungsverhalten, eine verbesserte Druckfestigkeit und/oder eine verbesserte Haftung aufweisen.

Die vorliegende Erfindung löst diese Probleme.

### Darstellung der Erfindung

Ein erster Aspekt der vorliegenden Erfindung betrifft demzufolge eine Multi-Komponenten-Zusammensetzung, umfassend
- eine Epoxy-Komponente, umfassend mindestens ein reaktives Epoxyharz,
- eine Härter-Komponente, umfassend mindestens einen Härter für das Epoxyharz,
- eine Zement-Komponente, umfassend Zement und mindestens einen Füllstoff, und
- 0,1 bis 10 Gew.-%, bezogen auf das Gesamtgewicht der Multi-Komponenten-Zusammensetzung, mindestens eines bei 23°C festen polymeren Bindemittels.

Für die Härtung der Zement-Komponente ist Wasser erforderlich. Dieses Wasser kann der Multi-Komponenten-Zusammensetzung entweder als separate Komponente zugesetzt werden, es ist jedoch bevorzugt, wenn das Wasser bereits Bestandteil mindestens einer der vorhandenen Komponenten, mit Ausnahme der Zement-Komponente, ist. Beispielsweise kann das Wasser in der Epoxy- und/oder der Härter-Komponente enthalten sein. Wenn das Wasser Bestandteil der Epoxy- und/oder der Härter-Komponente ist, ist es im Rahmen der vorliegenden Erfindung bevorzugt, wenn die Menge des Wassers in der Epoxy- und/oder der Härter-Komponente so eingestellt ist, dass die Wassermenge beim Mischen aller Komponenten für die Härtung des Zements ausreichend ist.

### Epoxy-Komponente

Die Epoxy-Komponente unterliegt hinsichtlich des einzubeziehenden reaktiven Epoxyharzes keinen wesentlichen Beschränkungen. Es ist jedoch im Rahmen der vorliegenden Erfindung bevorzugt, wenn das Epoxyharz ein Polyepoxid-Flüssigharz, im Folgenden als "Flüssigharz" bezeichnet, ist. Solche Flüssigharze weisen eine Glasübergangstemperatur auf, welche üblicherweise unterhalb von 25 °C liegt, im Gegensatz zu den sogenannten Festharzen, welche eine Glasübergangstemperatur oberhalb von 25 °C aufweisen und sich zu bei 25 °C schüttfähigen Pulvern zerkleinern lassen. Zudem ist es im Rahmen der vorliegenden Erfindung bevorzugt, wenn das Epoxyharz in Wasser emulgierbar ist.

In einer Ausführungsform handelt es sich bei dem Flüssigharz um ein aromatisches Polyepoxid. Dafür geeignet sind beispielsweise Flüssigharze der Formel (I), 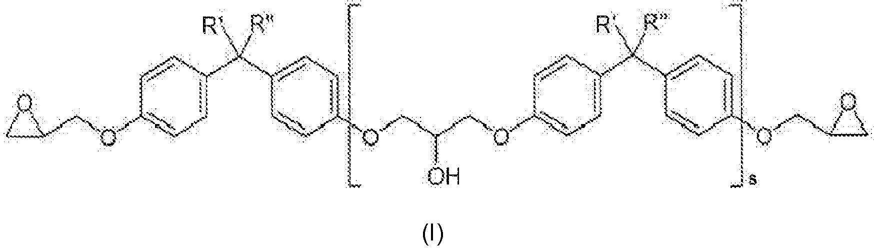 wobei R' und R" unabhängig voneinander jeweils für ein Wasserstoffatom oder für eine Methylgruppe stehen, und s im Mittel für einen Wert von 0 bis 1 steht. Bevorzugt sind solche Flüssigharze der Formel (I), bei denen der Index s im Mittel für einen Wert von kleiner als 0.2 steht.

Bei dem Flüssigharz der Formel (I) handelt es sich um Diglycidylether von Bisphenol-F, Bisphenol-A und/oder Bisphenol-A/F, wobei A für Aceton und F für Formaldehyd steht, welche als Edukte zur Herstellung dieser Bisphenole dienen. Ein Bisphenol-A-Flüssigharz weist dementsprechend Methylgruppen, ein Bisphenol-F-Flüssigharz Wasserstoffatome und ein Bisphenol-A/F-Flüssigharz sowohl Methylgruppen als auch Wasserstoffatome als R' und R" in Formel (I) auf. Im Fall von Bisphenol-F können auch Stellungsisomere vorhanden sein, insbesondere abgeleitet von 2,4'- und 2,2'-Bis-(hydroxyphenyl)methan.

Weitere geeignete aromatische Flüssigharze sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan, Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M).

Als Epoxidharz eignet sich auch ein aliphatisches oder cycloaliphatisches Polyepoxid, wie beispielsweise
- ein Glycidylether eines gesättigten oder ungesättigten, verzweigten oder unverzweigten, cyclischen oder offenkettigen C2- bis C30-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, cyclischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol-A, Bisphenol-F- oder -A/F-Festharz, welches ähnlich aufgebaut ist wie die bereits genannten Flüssigharze der Formel (I), aber anstelle des Index s einen Wert von 2 bis 12 aufweist, und eine Glasübergangstemperatur oberhalb von 25 °C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt sind Flüssigharze auf der Basis eines Bisphenols, insbesondere auf der Basis von Bisphenol-A, Bisphenol-F oder Bisphenol-A/F, besonders bevorzugt Bisphenol-F- und/oder Bisphenol-A-Epichlorhydrinharz, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtungen auf. Sie können gegebenenfalls in Kombination mit Bisphenol A-Festharz oder Bisphenol-F-Novolak-Epoxidharz verwendet werden.

Das Epoxidharz kann einen Reaktivverdünner, insbesondere einen mindestens eine Epoxidgruppe aufweisenden Reaktivverdünner, enthalten. Als Reaktivverdünner geeignet sind beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C8- bis C10-Alkylglycidylether oder C12- bis C14-Alkylglycidylether. Die Zugabe eines Reaktivverdünners zum Epoxidharz bewirkt eine bessere Verteilung des Epoxyharzes und bedingt ein gleichmäßigeres Durchhärten der Mischung, wodurch qualitätsmindernde Fehlstellen im gehärteten Produkt vermieden werden.

Zur Regulierung der Benetzung und besseren Verteilung in der Multi-Komponenten-Zusammensetzung bei deren Vermischung, kann die Epoxy-Komponente zweckmäßig bis zu etwa 15 Gew.-%, bezogen auf das Gewicht des reaktiven Epoxidharzes, eines wie vorstehend beschriebenen Reaktivverdünners enthalten. Bei besonders bevorzugten Reaktivverdünnern handelt es sich um einen Kresyl-, 2-Ethylhexyl- oder C12-C14-Glycidylether. Eine im Rahmen der vorliegenden Erfindung besonders bevorzugte Epoxy-Komponente enthält 35 bis 50 Gew.-% eines Bisphenol F-Epichlorhydrinharzes, 5 bis 25 Gew.-% eines Bisphenol A-Epichlorhydrinharzes sowie 2,5 bis 5 Gew.-% eines C12-C14-Gylcidylethers. Der zu 100 Gew.-% fehlende Anteil in dieser Zusammensetzung besteht vorzugsweise aus Wasser.

### Härter-Komponente

Die Härter-Komponente der vorliegenden Erfindung unterliegt ebenfalls keinen wesentlichen Beschränkungen. Im Rahmen der vorliegenden Erfindung ist es jedoch bevorzugt, wenn der Härter für das Epoxidharz in Form eines Polyamins vorliegt. Geeignete Polyamine sind aliphatische, cycloaliphatische, heterocyclische und aromatische Polyamine. Vorzugsweise handelt es sich bei dem als Härter verwendeten Polyamin um ein wasserlösliches oder in Wasser dispergierbares Polyamin.

Als Polyamin besonders geeignet sind insbesondere die folgenden Polyamine:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, Bis-(4-aminocyclohexyl)methan (H12-MDA), Bis-(4-amino-3-methylcyclohexyl)methan, Bis-(4-amino-3-ethylcyclohexyl)methan, Bis-(4-amino-3,5-dimethylcyclohexyl)methan, Bis-(4-amino-3-ethyl-5-methylcyclohexyl)methan (M-MECA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)bicyclo[2.2.1]heptan (NBDA), 3(4), 8(9)-Bis-(aminomethyl)tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5,5]undecan sowie 1,3- und 1,4-Bis-(aminomethyl)-benzol;
- aliphatische, cycloaliphatische oder arylaliphatische primäre Triamine wie 4-Aminomethyl-1,8-octandiamin, 1,3,5-Tris-(aminomethyl)benzol, 1,3,5-Tris-(aminomethyl)cyclohexan, Tris-(2-aminoethyl)amin, Tris-(2-aminopropyl)-amin und Tris-(3-aminopropyl)amin;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 4,7,10-Trioxatridecan-1,13-diamin und höhere Oligomere dieser Diamine, Bis-(3-aminopropyl)polytetrahydrofurane und andere Polytetrahydrofuran-diamine, sowie Polyoxyalkylen-Diamine. Letztere stellen typischerweise Produkte aus der Aminierung von Polyoxyalkylen-Diolen dar und sind beispielsweise erhältlich unter dem Namen Jeffamine® (von Huntsman), unter dem Namen Polyetheramine (von BASF) oder unter dem Namen PC Amine® (von Nitroil). Insbesondere geeignete Polyoxyalkylen-Diamine sind Jeffamine® D-230, Jeffamine® D-400, Jeffamine® D-2000, Jeffamine® D-4000, Jeffamine® XTJ-511, Jeffamine® ED-600, Jeffamine® ED-900, Jeffamine® ED-2003, Jeffamine® XTJ-568, Jeffamine® XTJ-569, Jeffamine® XTJ-523, Jeffamine® XTJ-536, Jeffamine® XTJ-542, Jeffamine® XTJ-559, Jeffamine® EDR-1 04, Jeffamine® EDR-148, Jeffamine® EDR-176; Polyetheramine D 230, Polyetheramine D 400 und Polyetheramine D 2000, PC Amine® DA 250, PC Amine® DA 400, PC Amine® DA 650 und PC Amine® DA 2000; - primäre Polyoxyalkylen-Triamine, welche typischerweise Produkte aus der Aminierung von Polyoxyalkylen-Triolen darstellen und beispielsweise erhältlich sind unter dem Namen Jeffamine® (von Huntsman), unter dem Namen Polyetheramine (von BASF) oder unter dem Namen PC Amine® (von Nitroil), wie insbesondere Jeffamine® T-403, Jeffamine® T-3000, Jeffamine® T-5000, Polyetheramine T 403, Polyetheramine T 5000 und PC Amine® TA 403;
- tertiäre Aminogruppen aufweisende Polyamine mit zwei primären aliphatischen Aminogruppen, wie insbesondere N,N'-Bis-(aminopropyl)-piperazin, N,N-Bis-(3-aminopropyl)methylamin, N,N-Bis-(3-aminopropyl)ethylamin, N,N-Bis-(3-aminopropyl)propylamin, N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)dodecylamin und N,N-Bis-(3-aminopropyl)talgalkylamin, erhältlich als Triameen® Y12D und Triameen® YT (von Akzo Nobel);
- tertiäre Aminogruppen aufweisende Polyamine mit drei primären aliphatischen Aminogruppen, wie insbesondere Tris-(2-aminoethyl)amin, Tris-(2-aminopropyl)amin und Tris-(3-aminopropyl)amin;
- sekundäre Aminogruppen aufweisende Polyamine mit zwei primären aliphatischen Aminogruppen, wie insbesondere 3-(2-Aminoethyl)aminopropylamin, Bis-hexamethylentriamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Aminopentyl)-1,3-pentandiamin, N5-(3-Amino-1-ethylpropyl)-2-methyl-1,5-pentandiamin und N,N'-Bis-(3-amino-1-ethylpropyl)-2-methyl-1,5-pentandiamin;
- eine primäre und eine sekundäre Aminogruppe aufweisende Polyamine, wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin und Produkte aus der Michael-artigen Additionsreaktion von primären aliphatischen Diaminen mit Acrylnitril, Malein- oder Fumarsäurediestern, Citraconsäurediestern, Acryl-und Methacrylsäureestern, Acryl- und Methacrylsäureamiden und Itaconsäurediestern, umgesetzt im Molverhältnis 1:1, weiterhin Produkte aus der partiellen reduktiven Alkylierung von primären aliphatischen Polyaminen mit Benzaldehyd oder ändern Aldehyden oder Ketonen, sowie partiell styrolisierte Polyamine wie Gaskamine® 240 (von Mitsubishi Gas Chemical (MGC));
- aromatische Polyamine, wie insbesondere m- und p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure®300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink® von Air Products), 1,2-Bis-(2-aminophenylthio)ethan, 2-Methylpropyl-(4-chloro-3,5-diaminobenzoat) und tert.Butyl-(4-chloro-3,5-diaminobenzoat);
- Addukte der genannten Polyamine mit Epoxiden und Epoxidharzen, insbesondere Addukte mit Diepoxiden im Molverhältnis von mindestens 2/1, Addukte mit Monoepoxiden im Molverhältnis von mindestens 1/1, sowie Umsetzungsprodukte aus Aminen und Epichlorhydrin, insbesondere jenes von 1,3-Bis-(aminomethyl)benzol, kommerziell erhältlich als Gaskamine® 328 (von MGC);
- Polyamidoamine, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oder TETA, darstellen, insbesondere die kommerziell erhältlichen Polyamidoamine Versamid® 100, 125, 140 und 150 (von Cognis), Aradur® 223, 250 und 848 (von Huntsman), Euretek® 3607 und 530 (von Huntsman) und Beckopox® EH 651, EH 654, EH 655, EH 661 und EH 663 (von Cytec); und
- Phenalkamine, auch Mannich-Basen genannt, welche Umsetzungsprodukte einer Mannich-Reaktion von Phenolen, insbesondere Cardanol, mit Aldehyden, insbesondere Formaldehyd, und Polyaminen darstellen, insbesondere die kommerziell erhältlichen Phenalkamine Cardolite® NC-541, NC-557, NC-558, NC-566, Lite 2001 und Lite 2002 (von Cardolite), Aradur® 3440, 3441, 3442 und 3460 (von Huntsman) und Beckopox® EH 614, EH 621, EH 624, EH 628 und EH 629 (von Cytec).

Bevorzugt als Polyamin sind Polyamine ausgewählt aus der Gruppe bestehend aus 1,3-Pentandiamin (DAMP), 1,5-Diamino-2-methylpentan (MPMD), 2-Butyl-2-ethyl-1,5-pentandiamin (C11-Neodiamin), 1,6-Hexandiamin, 2,2,4- und 2,4,4-Trimethylhexamethylendiamin (TMD), 1,12-Dodecandiamin, 1,3-Diaminocyclohexan, Bis-(4-aminocyclohexyl)methan (H12-MDA), Bis-(4-amino-3-methylcyclohexyl)methan, 1-Amino-3-aminomethyl-3,5,5-trimethylcyclohexan (IPDA), 1,3-Bis-(aminomethyl)cyclohexan, 1,3-Bis-(aminomethyl)benzol (MXDA), Bis-hexamethylentriamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (HEPA), Dipropylentriamin (DPTA), N-(2-Aminoethyl)-1,3-propandiamin (N3-Amin), N,N'-Bis(3-aminopropyl)ethylendiamin (N4-Amin), Polyoxyalkylen-Diamine und Polyoxyalkylen-Triamine mit einem Molekulargewicht im Bereich von 200 bis 500 g/mol, insbesondere die Typen Jeffamine® D-230, Jeffamine® D-400 und Jeffamine® T-403, Polyanilidoamine, Phenalkamine, an primären Aminogruppen vollständig oder teilweise alkylierte Verbindungen der genannten Polyamine und Addukte der genannten Polyamine mit Epoxiden und Epoxidharzen. Diese bevorzugten Polyamine A sind besonders gut verträglich mit Epoxidharzen.

In Zusammenhang mit der vorliegenden Erfindung ganz besonders bevorzugte Polyamine sind aliphatische Polyamine. Ein speziell bevorzugtes Amin ist 1-Amino-3-aminomethyl-3,5,5-trimethylcyclohexan allein oder in Mischung mit 2,2'-Dimethyl-4,4'-methylen(cyclohexanamin).

Im Rahmen der vorliegenden Erfindung kann die Härter-Komponente ausschließlich aus den genannten Aminen bestehen. Es ist jedoch auch möglich, dass die Härter-Komponente neben dem besagten Härtersystem Wasser und gegebenenfalls weitere Zusatzstoffe wie insbesondere Entschäumer enthält. In diesem Fall ist es bevorzugt, wenn der Härter 1 bis 25 Gew.-%, insbesondere 2 bis 20 Gew.-%, der Härter-Komponente, bezogen auf deren Gesamtgewicht, ausmacht. Der zu 100 Gew.-% fehlende Anteil besteht in diesem Fall vorzugsweise aus Wasser und den genannten Zusatzstoffen. Ein im Zusammenhang mit der vorliegenden Erfindung besonders bevorzugter Entschäumer ist BYK 023 (von BYK).

### Zement-Komponente

Die Zement-Komponente umfasst Zement und mindestens einen Füllstoff. Als Zement kann jeder verfügbare Zementtyp oder eine Mischung von zwei oder mehreren Zementtypen verwendet werden, beispielsweise die unter der DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V). Diese Haupttypen werden in 27 Unterklassen unterteilt, die dem Fachmann ohne Weiteres geläufig sind. Selbstverständlich sind Zemente, die gemäß einem alternativen Standard, wie beispielsweise dem ASTM-Standard oder dem indischen Standard, produziert werden, gleichermaßen geeignet.

Portlandzement ist der am häufigsten verwendete Zementtyp und kann im Zusammenhang mit der vorliegenden Erfindung besonders zweckmäßig eingesetzt werden. Dieser Zement wird in der gesamten Welt verwendet und ist ein Hauptbestandteil von Beton, Mörtel, Stuck und Einspritzmörtel. Portlandzement ist ein graues Pulver, das durch Mahlen von Portlandzementklinker (mehr als 90%) mit einem geringen Anteil an Calciumsulfat und bis zu 5% an weiteren Bestandteilen erhalten wird, wie dies im europäischen Standard EN 197-1 definiert ist. Das Calciumsulfat dient im Zement der Regulierung der Abbindezeit. Ein im Rahmen der vorliegenden Erfindung bevorzugter Zement ist Portlandzement, insbesondere Portlandzement I-42,5 R.

Zusätzlich zu Zement enthält die Zement-Komponente mindestens einen Füllstoff. Füllstoffe sind chemisch inerte feste partikuläre Materialien und werden in verschiedenen Formen, Größen und als unterschiedliche Materialien angeboten, die von feinen Sandpartikeln bis großen groben Steinen variieren. Beispiele von besonders geeigneten Füllstoffen sind Sand, Kies, zerkleinerte Steine, Schlacke, calcinierte Kiesel und leichte Füllstoffe, wie Ton, Bimsstein, Perlit und Vermiculit. Weitere vorteilhafte Füllstoffe sind Aluminiumoxid, Calciumcarbonat, Fasern, insbesondere Polymerfasern, und amorphe Kieselsäure (fumed silica). Vorzugsweise umfasst der Füllstoff Sand, insbesondere Quarzsand, da sich damit die Verarbeitbarkeit der Zusammensetzung vorteilhaft einstellen und eine ebene Oberfläche sicherstellen lässt.

Die Partikelgröße der Füllstoffe ist vorzugsweise relativ klein, d.h., weniger als 5 mm. Die Füllstoffe können beispielsweise eine Partikelgröße im Bereich von 0,05 mm bis 2,5 mm aufweisen, wobei Sand, insbesondere Quarzsand, besonders bevorzugt ist. Beispielsweise ist die Verwendung von Sand mit einer Partikelgröße im Bereich von 0,1 bis 0,6 mm, 0,3 bis 0,9 mm, 0,7 mm bis 1,2 mm und 1,5 bis 2,2 mm oder eines Gemisch davon mit Vorteilen verbunden. Die Partikelgröße kann mit Hilfe einer Siebanalyse bestimmt werden.

Der Anteil des Zements in der Zement-Komponente liegt vorzugsweise im Bereich von 20 bis 45 Gew.-%, insbesondere im Bereich von 25 bis 40 Gew.-%.

Sandbestandteile machen in der Zement-Komponente vorzugsweise 50 Gew.-% oder mehr aus, wobei ein Bereich von 50 bis 80 Gew.-%, insbesondere ein Bereich von 55 bis 70 Gew.-%, besonders bevorzugt ist.

Zusätzlich zu dem mindestens einen Füllstoff und Zement, insbesondere Quarzsand und Portlandzement, kann die Zement-Komponente weitere Zusatzstoffe enthalten, die dem Fachmann ohne weiteres geläufig sind. Beispielsweise können der Zement-Komponente Mittel zur Reduktion der Schwindung zugesetzt werden. Besonders geeignete Mittel zur Reduktion der Schwindung sind Calciumsulfoaluminate und/oder Neopentylglycol. Weitere optionale Bestandteile der Zement-Komponente sind Verflüssiger, Verdicker, Thixotropiermittel, Emulgatoren, Fließmittel, Luftporenbildner, Wasserretentionsmittel, Hydrophobierungsmittel, Stellmittel, Beschleuniger und/oder Verzögerer, die der Fachmann abhängig von den beabsichtigten Anwendungseigenschaften zusetzen kann. Neben diesen Zusatzstoffen sind auch alle anderen in der Mörtel- und Betontechnologie bekannten Zusatzstoffe als Additive denkbar.

Der Anteil dieser Zusatzstoffe in der Zement-Komponente, bezogen auf das Gesamtgewicht der Zement-Komponente, sollte vorzugsweise 10 Gew.-% nicht übersteigen. Besonders bevorzugt sollte die Gesamtmenge der Zusatzstoffe 5 Gew.-% oder weniger, insbesondere 3 Gew.-% oder weniger betragen.

### Bei 23°C festes polymeres Bindemittel

Wie vorstehend erläutert, enthält die erfindungsgemäße Multi-Komponenten-Zusammensetzung 0,1 bis 10 Gew.-%, bezogen auf das Gesamtgewicht der Multi-Komponenten-Zusammensetzung, mindestens eines bei 23°C festen polymeren Bindemittels. Bei dem festen polymeren Bindemittel handelt es sich vorzugsweise um ein Bindemittel auf Basis eines in Wasser dispergierbaren Pulvers, d.h., bei Einbringen des polymeren Bindemittels in Wasser bildet sich eine Dispersion des Bindemittels, ohne dass eine Phasentrennung des Wassers und des Bindemittels auftritt. Zur Verbesserung der dispersionsbildenen Eigenschaften des polymeren Bindemittels kann dieses zusätzlich geringe Mengen eines Emulgators, insbesondere in Form von Polyvinylalkohol, enthalten.

Die Partikelgröße des dispergierbaren Pulvers liegt vorzugsweise im Bereich von 0,1 bis 50 µm, besonders bevorzugt im Bereich von 1 bis 15 µm.

Weiterhin ist es im Rahmen der vorliegenden Erfindung bevorzugt, wenn das mindestens eine bei 23°C feste polymere Bindemittel auf einem Ethylen-Vinylacetat-Copolymer beruht, das gegebenenfalls ein oder mehrere weitere Comonomere enthalten kann. Es ist jedoch bevorzugt, wenn der Anteil solcher weiteren Comonomere 10 Gew.-%, bezogen auf das Gesamtgewicht des Ethylen-Vinylacetatcopolymers, nicht übersteigt. Insbesondere sollte der Anteil solcher weiteren Comonomere 5 Gew.-% oder weniger, besonders bevorzugt 2 Gew.-% oder weniger, betragen.

Das mindestens eine bei 23°C feste polymere Bindemittel besitzt vorzugsweise eine Glasübergangstemperatur (Tg) im Bereich von -10 bis +20°C, insbesondere -7 bis +15°C. Glasübergangstemperaturen sind im Rahmen dieser Erfindung mit DSC zu bestimmen.

Der Fachmann kann das Verhältnis von Ethylen zu Vinylacetat in entsprechenden Copolymeren ohne weiteres so anpassen, dass sich derartige Glasübergangstemperaturen einstellen lassen. Vorzugsweise liegt das Gewichtsverhältnis von Ethylen zu Vinylacetat Bereich von 10:90 bis 30:70.

Im Rahmen der vorliegenden Erfindung ist es weiterhin bevorzugt, wenn das mindestens eine bei 23°C feste polymere Bindemittel mit einem Gehalt von 0,25 bis 3 Gew.-% in der Multi-Komponenten-Zusammensetzung enthalten ist.

### Bevorzugte Verhältnisse im Rahmen der Erfindung.

Für die Multi-Komponenten Zusammensetzung ist es zweckmäßig, wenn das Gewichtsverhältnis des mindestens einen Epoxyharzes in der Epoxy-Komponente zu dem mindestens einen Härter in der Härter-Komponente im Bereich von 2,5:1 bis 1:1, insbesondere im Bereich von 1,9:1 bis 1,3:1, liegt. Das Gewichtsverhältnis von Epoxyharz in der Epoxy-Komponente zu Härter in der Härter-Komponente hängt unabhängig von dem Vorstehenden wesentlich vom Verhältnis der gegenüber Epoxy reaktiven funktionellen Gruppen in der Härter-Komponente zu den Epoxyfunktionen in der Epoxy-Komponente ab. So sollte der Anteil der gegenüber Epoxyfunktionen reaktiven funktionellen Gruppen in der Härter-Komponente gegenüber den Epoxyfunktionen in der Epoxy-Komponente nicht mehr als 1:1 betragen, da sonst eine zu geringe Größe des Epoxypolymers erreicht wird, was die Härte des Materials wesentlich beeinträchtigen kann. Hinsichtlich eines Epoxyüberschusses unterliegt die vorliegende Erfindung keinen so strikten Beschränkungen, da eine weitere Aushärtung von Epoxyharzen auch über die im Rahmen der Reaktion des Härters mit der Epoxy-Komponente gebildeten Hydroxyfunktionen möglich ist. Dies erfordert jedoch in der Regel eine höhere Temperatur, so dass das Verhältnis der gegenüber Epoxiden reaktiven funktionellen Gruppen, insbesondere der Aminfunktionen, in der Härter-Komponente zu den Epoxyfunktionen in der Epoxy-Komponente vorzugsweise im Bereich von 1,1 : 1 bis 0,9 : 1 liegen sollte. Vorzugsweise beträgt das Verhältnis etwa 1 : 1.

Im Rahmen der vorliegenden Erfindung ist es weiterhin bevorzugt, wenn die Zement-Komponente den wesentlichsten Bestandteil der Multi-Komponenten-Zusammensetzung ausmacht. Insbesondere macht die Zement-Komponente etwa 70 bis etwa 95 Gew.-%, vorzugsweise etwa 75 bis etwa 88 Gew.-% der Multi-Komponenten-Zusammensetzung aus. Die jeweils zu 100 Gew.-% fehlende Menge wird durch die Epoxy-Komponente, die Härter-Komponente, das mindestens eine bei 23°C feste polymere Bindemittel und gegebenenfalls weitere Komponenten bereitgestellt.

Es ist möglich weitere Bestandteile separat von diesen Komponenten zuzusetzen, dies ist jedoch aufgrund des mit noch weiteren Komponenten verbundenen zusätzlichen Aufwands weniger vorteilhaft. Im Rahmen der vorliegenden Erfindung ist es daher bevorzugt, wenn die Multi-Komponenten-Zusammensetzung im Wesentlichen aus einer Epoxy-Komponente, einer Härter-Komponente, einer Zement-Komponente sowie mindestens einem bei 23°C festen polymeren Bindemittel besteht. Zudem ist es möglich, das mindestens eine 23°C feste polymere Bindemittel bereits der Epoxy-, Härter- oder Zement-Komponente zuzumischen, womit sich die Anzahl der Komponenten entsprechend reduziert.

Im Rahmen der vorliegenden Erfindung ist es bevorzugt, wenn die Epoxy-Komponente etwa 0,5 bis 10 Gew.-%, vorzugsweise etwa 1 bis 5 Gew.-% der Multi-Komponenten-Zusammensetzung ausmacht. Weiterhin ist es bevorzugt, wenn die Epoxy-Komponente neben mindestens einem Epoxyharz Wasser enthält, wobei das Verhältnis von Epoxyharz zu Wasser vorzugsweise im Bereich von 3:1 bis 1:1, besonders bevorzugt Im Bereich von 2:1, liegt.

Für die Härter-Komponente ist es bevorzugt, wenn diese 1 bis 20 Gew.-%, insbesondere 2 bis 15 Gew.-% der Multi-Komponenten-Zusammensetzung ausmacht. Die Härter-Komponente enthält zweckmäßig ebenfalls Wasser, wobei der Anteil des mindestens einen Härters in der Härter-Komponente relativ gering sein kann, und vorzugsweise im Bereich von 1 bis 25 Gew.-%, und besonders bevorzugt im Bereich von 2 bis 20 Gew.-%, liegen sollte. Weiterhin ist es bevorzugt, wenn der zu 100 Gew.-% fehlende Anteil der Härter-Komponente auf Wasser und gegebenenfalls zusätzlichen Entschäumern beruht.

Ein weiterer Aspekt der vorliegenden Erfindung betrifft die Verwendung mindestens eines bei 23°C festen polymeren Bindemittels zur Verbesserung der Haftung und/oder der Druckfestigkeit und/oder zur Verminderung der Schwindung einer Multi-Komponenten-Zusammensetzung, die eine Epoxy-Komponente, eine Härter-Komponente und eine Zement-Komponente umfasst. Für die Epoxy-, Härter- und Zement-Komponente sowie für das polymere Bindemittel gelten die vorstehenden Ausführungen zu bevorzugten Ausführungsformen analog.

Ein weiterer Aspekt der vorliegenden Erfindung betrifft ein Verfahren zur Herstellung eines beschichteten Substrats, umfassend die Schritte
- Vermischen einer Epoxy-Komponente, umfassend mindestens ein reaktives Epoxyharz, und einer Härter-Komponente, umfassend mindestens einen Härter für das Epoxyharz,
- Zugabe einer Zement-Komponente, umfassend Zement und mindestens einen Füllstoff, und 0,1 bis 10 Gew.-%, bezogen auf das Gesamtgewicht der Mischung, mindestens eines bei 23 °C festen polymeren Bindemittels und gegebenenfalls Wasser unter Erhalt einer im Wesentlichen homogenen Mischung,
- Aufbringen der Mischung auf ein Substrat, und
- Härten der aufgebrachten Mischung unter Erhalt eines beschichteten Substrats.

Bei dem Substrat handelt es sich vorzugsweise um einen Boden, wobei die Beschichtung einen Bodenbelag bildet. Besonders bevorzugt handelt es sich bei dem Bodenbelag um einen selbstverlaufenden Bodenbelag.

Für das vorstehend beschrieben Verfahren ist es nicht entscheidend, dass das mindestens eine bei 23°C feste polymere Bindemittel zur bereits mit der Härter-Komponente vermischten Epoxy-Komponente gegeben wird. Es ist ebenso möglich, das mindestens eine bei 23°C feste polymere Bindemittel zur Epoxy-Komponente zu geben und mit dieser zu vermischen, bevor die Härter-Komponente zugegeben wird. Alternativ kann das feste polymere Bindemittel zur Härter-Komponente gegeben und mit dieser vermischt werden, bevor die Epoxy-Komponente zugegeben wird. Hinsichtlich der Zement-Komponente ist es jedoch zweckmäßig, diese zu einer Mischung zuzugeben, die bereits das für die Härtung der Zement-Komponente benötigte Wasser enthält.

Für die vorstehend bezeichneten Epoxy-, Härter-, Zement-Komponenten sowie für das mindestens eine bei 23°C feste polymere Bindemittel gelten im Rahmen des beschriebenen Verfahrens die Ausführungen zu bevorzugten Ausführungsformen aus dem Vorstehenden analog.

Ein weiterer Aspekt der vorliegenden Erfindung betrifft ein beschichtetes Substrat, das nach einem wie vorstehend beschriebenen Verfahren erhältlich ist. Insbesondere handelt es sich bei dem Substrat um einen beschichteten Boden, bei dem die Beschichtung ein Bodenbelag ist. Der Bodenbelag ist bevorzugt ein selbstverlaufender Bodenbelag. Die Multi-Komponenten-Zusammensetzung gemäß der vorliegenden Erfindung ist jedoch nicht auf die Herstellung solcher Bodenbeläge beschränkt, sondern es ist ebenso möglich, derartige Multi-Komponenten-Zusammensetzungen beispielsweise als Estriche, Mauer, Putz und Reparaturmörtel zu verwenden.

Im Folgenden wird die vorliegende Erfindung anhand von Beispielen näher erläutert, die jedoch keine Relevanz für die Bestimmung des Schutzumfangs der vorliegenden Erfindung haben.

### Beispiele

### Bestandteile der Epoxy-, Härter- und Zement-Komponente

Für die folgenden Versuche wurde eine Epoxy-Komponente A als Emulsion aus etwa 62 Gew.-% eines Bisphenol A/F-Harzgemischs und 38 Gew.-% Wasser verwendet.

Als Härter-Komponente B1 wurde eine Zusammensetzung aus 2,4 Gew.-% eines modifizierten Aminhärters (auf Basis von 1-Amino-3-aminomethyl-3,5,5-trimethylcyclohexan), 0,1 Gew.-% eines Entschäumers und 97,5 Gew.-% Wasser verwendet. Es wurde ebenfalls eine stärker konzentrierte Härter-Komponente B2 hergestellt, die 18 Gew.-% des Aminhärters, 0,75 Gew.-% des Entschäumers und 81,25 Gew.-% Wasser enthielt.

Als Zementzusammensetzung wurde eine Mischung aus 33 Gew.-% Portlandzement I 42,5R, etwa 62 Gew.-% Sand mit Partikelgrößen im Bereich von 0,1 bis 2,2 µm, 1 Gew.-% Schwindungsreduktionsmittel (beruhend auf Calciumsulfoaluminat und Neopentylglycol), 2 Gew.-% Calciumcarbonat und etwa 1,2 Gew.-% eines Gemischs aus Fasern, Verdicker, amorpher Kieselsäure und einem Chromatreduzierer verwendet.

Die bezeichneten Zusammensetzungen wurden im Verhältnis 1:14:84 (Epoxy-Komponente, Härter-Komponente B1, Zement-Komponente; Tabellen 2 bis 5) oder im Verhältnis 1:2,5:18,5 (Epoxy-Komponente, Härter-Komponente B2, Zement-Komponente; Tabelle 1) eingesetzt. Daraus ergibt sich ein Anteil an Epoxyharz in der Zusammensetzung von etwa 1 Gew.-% bzw. etwa 4 Gew.-%.

Zu diesen Mischungen wurden polymere Bindemittel in Form von Vinnapas® 7220 N, Vinnapas® 5044 N, Vinnapas® 7034 E und Vinnapas® 7031 A der Firma Wacker AG gegeben. Die Menge dieser Zusatzstoffe lag im Bereich von 0 bis 4 Gew.-%, bezogen auf das Gesamtgewicht aller Bestandteile der Zusammensetzung. Die entsprechenden Zusammensetzungen wurden durch Vermischen der Epoxy- und Härter-Komponente und anschließende Zugabe der Zement-Komponente und des polymeren Bindemittels hergestellt.

Von den so hergestellten Zusammensetzungen wurde die Verarbeitbarkeit, das Schwindungsverhalten, die Druckfestigkeit und Haftfestigkeit bestimmt.

Die **Verarbeitbarkeit** wurde bestimmt, indem die Zusammensetzung auf eine konventionelle Gehwegplatte aus Beton aufgetragen und dort verarbeitet wurde. Die Verarbeitbarkeit wurde durch den Verarbeiter als Wert auf einer Skala von 1 bis 4 festgelegt, auf der 1 den schlechtesten und 4 den besten Wert darstellt.

Das **Schwindungsverhalten** wurde gemäß der Norm EN 12617-4 an 4x4x16cm Prismen bestimmt. Vor der Messung wurden die Prismen für 28 Tage gehärtet.

Die **Druckfestigkeit** wurde gemäß der Norm EN 12190 an 4x4x16cm Prismen bestimmt. Vor der Messung wurden die Prismen für 28 Tage gehärtet.

Die **Haftfestigkeit** wurde gemäß der Norm EN 1542 auf einer sandgestrahlten Gartenplatte aus Beton bestimmt. Vor der Messung wurde die Zusammensetzung auf der Platte für 28 Tage gehärtet.

Die für die verschiedenen Zusammensetzungen bestimmten Parameter sind in den folgenden Tabellen 1 bis 5 wiedergegeben:

**Tabelle 1**

| Menge an Vinnapas 7220N in Gew.-% | Verarbeitbarkeit | Schwindung in mm/m | Druckfestigkeit in MPa | Haftfestigkeit in MPa |
|---|---|---|---|---|
| 0 | 2 | -0,442 | 60,1 | 3,7 |
| 0,5 | 2 | -0,452 | 60,3 | 3,9 |
| 1,0 | 2 | -0,504 | 60,8 | 4,1 |
| 2,0 | 1 | -0,627 | 61,5 | 4,3 |
| 3,0 | 1 | -0,654 | 59,6 | 3,9 |

**Tabelle 2**

| Menge an Vinnapas 7220N in Gew.-% | Verarbeitbarkeit | Schwindung in mm/m | Druckfestigkeit in MPa | Haftfestigkeit in MPa |
|---|---|---|---|---|
| 0 | 4 | -0,614 | 41,6 | 1,1 |
| 1,0 | 4 | -0,575 | 38,9 | 1,6 |
| 2,0 | 4 | -0,637 | 40,9 | 2,1 |
| 3,0 | 4 | -0,592 | 37,2 | 2,8 |

**Tabelle 3**

| Menge an Vinnapas 5044N in Gew.-% | Verarbeitbarkeit | Schwindung in mm/m | Druckfestigkeit in MPa | Haftfestigkeit in MPa |
|---|---|---|---|---|
| 0 | 4 | -0,614 | 41,6 | 1,1 |
| 0,25 | 3 | -0,627 | 39,8 | 2,1 |
| 1,0 | 4 | -0,504 | 38,2 | 2,1 |
| 2,0 | 4 | -0,442 | 41,8 | 2,0 |
| 3,0 | 3 | -0,488 | 42,1 | 2,7 |

**Tabelle 4**

| Menge an Vinnapas 7034E in Gew.-% | Verarbeitbarkeit | Schwindung in mm/m | Druckfestigkeit in MPa | Haftfestigkeit in MPa |
|---|---|---|---|---|
| 0 | 4 | -0,614 | 41,6 | 1,11 |
| 0,25 | 3 | -0,554 | 40,2 | 2,14 |
| 1,0 | 4 | -0,521 | 37,1 | 2,13 |
| 2,0 | 4 | -0,413 | 36,6 | 2,47 |
| 3,0 | 3 | -0,413 | 39,7 | 2,56 |

**Tabelle 5**

| Menge an Vinnapas 7031H in Gew.-% | Verarbeitbarkeit | Schwindung in mm/m | Druckfestigkeit in MPa | Haftfestigkeit in MPa |
|---|---|---|---|---|
| 0 | 4 | -0,614 | 41,6 | 1,11 |
| 0,25 | 4 | -0,542 | 39,5 | 1,38 |
| 1,0 | 4 | -0,448 | 37,3 | 1,63 |
| 2,0 | 4 | -0,442 | 32,8 | 1,37 |
| 3,0 | 4 | -0,385 | 30,3 | 2,86 |

Aus den vorstehenden Tabellen ist ersichtlich, dass der Zusatz von bei 23°C festem polymeren Bindemittel die Eigenschaften der erfindungsgemäßem Multi-Komponenten-Zusammensetzung in Bezug auf die Schwindung, in Bezug auf Druckfestigkeit sowie in Bezug auf die Haftfestigkeit wesentlich verbessern kann. So zeigt sich bei der Schwindung bei Zusatz von Vinnapas 5044N teilweise eine signifikante Verbesserung. Dieses Polymer zeigt ebenfalls die größte Steigerung der Druckfestigkeit: Die Werte bewegen sich im Bereich von 41 MPa bis 43 MPa. Der Einsatz des polymeren Bindemittels Vinnapas 7220N zeigt hingegen gegenüber Zusammensetzungen ohne entsprechenden Zusatz eine verbesserte Haftfestigkeit.

Es zeigt sich demzufolge, dass der Zusatz mindestens eines bei 23°C festen polymeren Bindemittels die Eigenschaften von Multi-Komponenten-Zusammensetzungen, beruhend auf einer Epoxy-Komponente, einer Härter-Komponente und einer Zement-Komponente, teilweise signifikant verbessert werden kann.

Bei Tabelle 1 ist zu berücksichtigen, dass die angegebenen Verarbeitbarkeiten das Ergebnis einer nicht optimierten Zusammensetzung darstellen. Die Verarbeitbarkeit lässt sich aber durch Zusatz entsprechender Additive wie Verflüssigern oder Thixotropiermitteln verbessern.

## Patentansprüche

1. Multi-Komponenten-Zusammensetzung umfassend
- eine Epoxy-Komponente, umfassend mindestens ein reaktives Epoxyharz,
- eine Härter-Komponente, umfassend mindestens einen Härter für das Epoxyharz,
- eine Zement-Komponente, umfassend Zement und mindestens einen Füllstoff, und
- 0,1 bis 10 Gew.-%, bezogen auf das Gesamtgewicht der Multi-Komponenten-Zusammensetzung, mindestens eines bei 23 °C festen polymeren Bindemittels.

2. Multi-Komponenten-Zusammensetzung nach Anspruch 1, **dadurch gekennzeichnet, dass** die Epoxy- und/oder die Härter-Komponente Wasser enthält, vorzugweise in einer zur Härtung des Zements ausreichenden Menge.

3. Multi-Komponenten-Zusammensetzung nach Anspruch 1 oder 2, **dadurch gekennzeichnet, dass** der Füllstoff in der Zement-Komponente Sand, vorzugsweise Quarzsand, Aluminiumoxid, Kalziumcarbonat, Fasern, und/oder amorphe Kieselsäure (fumed silica) umfasst.

4. Multi-Komponenten-Zusammensetzung nach einem der Ansprüche 1 bis 3, **dadurch gekennzeichnet, dass** das Epoxyharz ein Bisphenol-F-und/oder Bisphenol-A-Harz, vorzugsweise ein Bisphenol-F- und/oder Bisphenol-A-Epichlorhydrin-Harz, umfasst.

5. Multi-Komponenten-Zusammensetzung nach einem der vorstehenden Ansprüche, **dadurch gekennzeichnet, dass** die Härter-Komponente ein Polyamin, vorzugsweise ein aliphatisches Polyamin, umfasst.

6. Multi-Komponenten-Zusammensetzung nach einem der vorstehenden Ansprüche, **dadurch gekennzeichnet, dass** das mindestens eine bei 23°C feste polymere Bindemittel ein in Wasser dispergierbares Pulver ist, und vorzugsweise auf einem Ethylen-Vinylacetat-Copolymer beruht, das ein oder mehrere weitere Comonomere enthalten kann.

7. Multi-Komponenten-Zusammensetzung nach einem der vorstehenden Ansprüche, **dadurch gekennzeichnet, dass** die Zusammensetzung 0,25 bis 3 Gew.-% des mindestens einen bei 23°C festen polymeren Bindemittels enthält.

8. Multi-Komponenten-Zusammensetzung nach einem der vorstehenden Ansprüche, **dadurch gekennzeichnet, dass** das Gewichtsverhältnis des mindestens einen Epoxyharzes in der Epoxy-Komponenten zu dem mindestens einen Härter in der Härter-Komponente im Bereich von 2,5 : 1 bis 1 : 1, vorzugsweise im Bereich von 1,9 : 1 bis 1,3 :1 liegt.

9. Multi-Komponenten-Zusammensetzung nach einem der vorstehenden Ansprüche, **dadurch gekennzeichnet**, das die Zement-Komponente Portlandzement und Quarzsand enthält.

10. Multi-Komponenten-Zusammensetzung nach einem der vorstehenden Ansprüche, **dadurch gekennzeichnet, dass** die Zement-Komponente 70 bis 95 Gew.-%, vorzugsweise 75 bis 88 Gew.-%, der Multi-Komponenten Zusammensetzung ausmacht.

11. Verwendung mindestens eines bei 23 °C festen polymeren Bindemittels zur Verbesserung der Haftung und/oder der Druckfestigkeit und/oder zur Verminderung der Schwindung einer Multi-Komponenten-Zusammensetzung umfassend eine Epoxy-Komponente, eine Härter-Komponente und eine Zement-Komponente.

12. Verfahren zur Herstellung eines beschichteten Substrats, umfassend die Schritte
- Vermischen einer Epoxy-Komponente umfassend mindestens ein reaktives Epoxyharz, und einer Härter-Komponente umfassend mindestens einen Härter für das Epoxyharz
- Zugabe einer Zement-Komponente umfassend Zement und mindestens einen Füllstoff und 0,1 bis 10 Gew.-%, bezogen auf das Gesamtgewicht der Mischung, mindestens eines bei 23 °C festen polymeren Bindemittels und gegebenenfalls Wasser unter Erhalt einer im Wesentlichen homogenen Mischung
- Aufbringen der Mischung auf ein Substrat, und
- Härten der aufgebrachten Mischung unter Erhalt eines beschichteten Substrats.

13. Beschichtetes Substrat, erhältlich nach dem Verfahren gemäß Anspruch 12.

14. Beschichtetes Substrat nach Anspruch 13, **dadurch gekennzeichnet, dass** das beschichtete Substrat ein Boden mit einem Bodenbelag, vorzugsweise mit einem selbstverlaufenden Bodenbelag, ist.
